Europäisches Patentamt

European Patent Office

Office européen des brevets

(19)

(11) **EP 1 624 637 A1**

(12) **EUROPEAN PATENT APPLICATION**
published in accordance with Art. 158(3) EPC

(43) Date of publication:
**08.02.2006 Bulletin 2006/06**

(21) Application number: **04732124.5**

(22) Date of filing: **11.05.2004**

(51) Int Cl.:
*H04L 27/34* (1990.01)    *H04J 11/00* (1974.07)

(86) International application number:
**PCT/ES2004/000207**

(87) International publication number:
**WO 2004/102916 (25.11.2004 Gazette 2004/48)**

(84) Designated Contracting States:
**AT BE BG CH CY CZ DE DK EE ES FI FR GB GR HU IE IT LI LU MC NL PL PT RO SE SI SK TR**

(30) Priority: **14.05.2003 ES 200301120**

(71) Applicant: **Diseno de Sistemas en Silicio S.A.**
**46980 Paterna (Valencia) (ES)**

(72) Inventors:
• **BLASCO CLARET, Jorge, Vicente**
  **E-46020 Valencia (ES)**
• **RIVEIRO INS A, Juan Carlos,**
  **Beata Genoveva Torres**
  **E-46019 Valencia (ES)**
• **BADENES CORELLA, Agustin**
  **E-12003 Castellón (ES)**

(74) Representative: **Ungria Lopez, Javier et al**
**Avda. Ramon y Cajal, 78**
**28043 Madrid (ES)**

(54) **NORMALISED COHERENT AMPLITUDE AND DIFFERENTIAL PHASE MODULATION METHOD FOR MULTI-USER COMMUNICATIONS**

(57)    It is **characterized in that** the information to be modulated in the phase difference, that belongs to the set of information possible according to the number of phases of the constellation to be used, an injective application between this set and the set of information possible to be modulated corresponding to the constellation with the maximum number of phases is carried out.

This permits bits to be changed by a carrier without sending a new phase reference, to maximize the number of symbols of information within the frame and to implement a modulator and a low complexity modulator and demodulator.

Applicable in multiuser digital communication that requires bits to be changed by the carrier of the constellation in one single data frame, in order to adapt to the maximum transmission capacity of the channel, to follow the amplitude variations thereof and to allow information to be transmitted from one to several users.

FIG.1

EP 1 624 637 A1

# Description

As expressed in the title of this specification, the present invention refers to a process for standardized differential in-phase and coherent in amplitude modulation for multiuser communication.

The process of the invention is applicable to communication systems irrespective of the physical medium that they use for the communication and the main characteristics thereof consist of allowing adaptation to the maximum transmission capacity offered by the channel, carrying out a follow-up of the amplitude variations thereof and allowing transmission from one to several users in an efficient way, facilitating the implementation of a low complexity modulator and demodulator.

## BACKGROUND OF THE INVENTION

In telecommunication systems in order to send information by way of a communication channel it is usually necessary to modulate said information; in other words, to adequate and adapt the information to the channel.

Some of the main problems that a digital communication receiver encounters are equalization that entails an estimation of the channel, and the deviation in frequency of the clock of the receiver with respect to the transmitter. When coherent QAM modulations (quadrature amplitude modulation) are used, it is necessary to greatly increment the complexity of the demodulator in order to challenge the above-cited problems. One solution consists of using differential modulations or DAPSK (differential amplitude phase modulation) wherein the information is encoded in the increments of amplitude and phase. This differential encoding eliminates the need of the estimation of the reception channel and minimizes to a large degree the effects of deviation of frequency between the clocks of the transmitter and of the receiver. But this reduction in complexity of the receiver when using totally differential modulation entails an increment in the probability of bit error for the same value of SNR (Signal-to-Noise-Ratio) with respect to the performance of the QAM modulations.

On the other hand, ADPSK modulation (amplitude differential phase modulation) is known in the prior art just as it appears in "Comparison and optimization of differentially encoded transmission on fading channels", L. Lampe and R. Fischer, Proceedings ISPLC'99; "Performance evaluation of noncoherent transmission over power lines", L. Lampe, R. Fisher and R. Schober, Proceedings ISPLC'00; and "Differential encoding strategies for transmission over fading channels", R. Fischer, L. Lampe and S. Calabrò, International Journal on Electronics and Communications.

Said modulation is a modulation mixed between the two preceding ones (QAM and DAPSK), and represents a middle point, as far as the performance and complexity of the receiver is concerned, between both. In other words, it minimizes the problem posed by the deviation of frequency between the clocks of the transmitter and receiver of a digital communication system and reduces the complexity of the estimation of the channel, since it is only necessary to estimate the channel in amplitude. Therefore, ADPSK modulation represents the best compromise between performance and complexity of the receiver for a practical implementation.

On the other hand, if one desires to always obtain the maximum data transfer rate, it is necessary to adapt the bits per carrier of the modulation to the capacity offered by the channel. In other words, given the probability of objective bit error it is sought to use the maximum number of bits per carrier to ensure a probability of error equal to or lower than this value. Furthermore, in a multipoint to point multiuser communication or multipoint to multipoint, a transmitter can send information to several receivers through different channels in a single data frame. Therefore, in a single frame different constellations will be used. Another important factor to achieve this maximum data transfer rate is to minimize the overhead (control information of the system necessary for correct reception of the data and that it is sent together therewith). This overhead is more important if transmission strategies based on the use of multiple carrier such as OFDM (orthogonal frequency division multiplexity) are used where the times of symbols are much longer and contain much more information than in a digital communication wherein a single frequency information carrier is used.

ADPSK modulation has two important requirements. This first one is that, due to the fact that part of the information is encoded in the phase increments, it is necessary to previously send a symbol that constitutes a phase reference for the receiver. Likewise, the rest of the information is encoded in the value of the amplitude of the symbol received. Therefore, the second requirement is that it is necessary to estimate the value of the amplitude of the response of the channel to correct the effect thereof on the receiver. Besides, the real channels have a certain variation of their characteristics with time, which forces the receiver to carry out a follow-up and updating of the initial estimation.

The above-cited articles describe the operation of the ADPSK modulator and demodulator and the performance thereof, and does not describe the possibility of using different constellations within a single data frame. In this latter case, in order to change the constellation it would be necessary to send a new phase reference or increment to a large degree the complexity of the modulator, which hampers the practical implementation thereof and prevents optimum multiuser communication. The process of the invention filed solves this problem, permitting a single phase reference to be sent at the beginning of the frame and facilitating practical implementation of the low complexity modulator.

Likewise, the invention permits the insertion of data symbols in the frame in such a way that users to whom the transmitter data are not going to be directed can monitor the channel and follow the variations thereof.

## DESCRIPTION OF THE INVENTION

In order to achieve the aims and avoid the drawbacks indicated in the preceding paragraphs, the invention consists of a process for standardized differential in-phase and coherent in amplitude modulation applicable in any communication system that carries out bidirectional communications of user's multiple equipment. In this modulation the information is modulated in the value of the amplitude and the phase increments and requires a phase reference symbol to be sent prior to sending information symbols, just as it has been described in the preceding section. The invention is characterized in that the information to be modulated in the phase difference, that belongs to the possible information set according to the number of phases of the constellation to be used, an injective application is carried out between this set and the set of information possible to be modulated corresponding to the constellation with the maximum number of phases. This application consists of a projection of the elements of the first set in the same number of elements of the second set that produces the maximum separation, measured in radians, of the points resulting from the constellation with the maximum number of phases. In this way, the information of input into the phase differential modulator belongs to this second set.

Equalization of the channel, that is carried out in the reception, is carried out in two steps, wherein the first one consists of obtaining an initial estimation of the attenuation of the channel, and the second one carries out the follow-up and reduction of the residual error of the first estimation by means of applying an adaptive algorithm.

In reception, in order to carry out the initial estimation of the attenuation of the channel, the phase reference symbol is used and a certain number of the following symbols received. This set of symbols, formed by the reference, and a number of symbols following the reference set, has an amplitude value known in advance. The estimation is carried out by means of the accumulation of the amplitudes of the symbols that form the set and the mean by the number of symbols that comprise said set.

Besides, thanks to the process of the invention, in these symbols following the reference symbol, information encoded in the phase difference is sent, whereby these symbols are used to send information and to carry out the initial estimation of the attenuation of the channel.

On the other hand, this initial estimation of the attenuation of the channel is used as an initial input to an adaptive algorithm that permits the changes of channel amplitude to be followed and the error made in the first estimation to be reduced from the modulated information received.

In order to improve this follow-up of the channel, and so that users who are not receivers of the information can carry out said follow-up, symbols with encoded phase and amplitude information known in certain instants indicated by the transmitter to the receiver are inserted in the frame.

The described process of the invention permits practical implementation of an optimum multiuser communication system, minimizing the overhead and reducing the modulator and demodulator complexity upon permitting the constellation or user to be changed in a single frame. Furthermore, it facilitates the sending of information in the symbols used for the estimation of the amplitude or attenuation of the channel. Likewise, it permits the initial estimation of the channel to be updated to the users who are not receivers of the information. In this way, the variation thereof can be followed in time by means of the insertion of symbols in the known amplitude frame, but with information on the phase increment.

Hereinafter to provide a better understanding of this specification and forming an integral part thereof, some figures

wherein the object of the invention has been represented in an illustrative and non-restrictive manner are accompanied.

## BRIEF DESCRIPTION OF THE FIGURES

Figure 1 represents the block diagram of an embodiment of an ADPSK modulator that integrates the process of the invention.

Figure 2 represents the block diagram of the ADPSK demodulator that functions according to the invention.

Figure 3 represents the frame structure used in a system that carries out the process of the invention.

## DESCRIPTION OF AN EMBODIMENT OF THE INVENTION

Hereinafter a description of an embodiment of the invention is made, making reference to the numbering used in the figures.

As it has been commented on in the section on the background of the invention, ADPSK modulation is a mixed modulation between DAPSK (differential) modulations and QAM (coherent) modulations. Hence, the bits to be modulated are converted into amplitudes $a_k$ (information to be modulated into amplitude), and in $\Delta b_k$ phase increments (information to be modulated in the phase increment), assuming that the M constellation points are distributed in R rings and P phases, according to the following formulae:

$$\{ (a_k, \Delta b_k), \ k = ..., 0, 1, 2, ... \},$$

wherein:

$a_k \ \varepsilon \ \{0,1,...,R-1\}$

$\triangle b_k \varepsilon \{0,1,...,P-1\}$

The low-pass equivalent of the modulated value will be:

Wherein A is the displacement of the first ring with respect to the center, $\mu$ is the factor that modifies the separation between the rings, and

That is used to standardize the constellation to power unit.

Y:

$$b_k = (b_{k-1} + \Delta b_k) \bmod P$$

Which represents the differential character of the phase. The values of *R, P, A* and $\mu$ determine the geometry of the constellation and, therefore, the performance thereof. The optimum values are obtained by minimizing the probability of bit error in reception. For each value of $\mu$ there is a value of *A* that minimizes said probability, and therefore, in order to simplify the calculations in this embodiment of the process of the invention $\mu$ is established to be 1 and consequently the preceding equations remain:

The optimum value for each constellation, in this embodiment, is the following:

Given the characteristics of the modulation, the demodulator needs a phase reference in order to begin to demodulate the encoded bits in the phase increments, and an estimation of the attenuation of the channel in order to equalize the amplitude and in order to be able to demodulate the bits encoded therein. In this embodiment, multiple carriers (OFDM) are used and each carrier is modulated in ADPSK in order to implement a point to multipoint communication. In an OFDM communication the phase reference is an overhead symbol, just like the symbols needed to carry out the first estimation of the amplitude of the channel. Besides, in point to multipoint communication (the information frame sent by a node can carry information for several nodes), wherein each user will use some different bits per carrier in order to maximize the data transfer rate, a change of bits per carrier would be necessary per user that would require a new incremented phase with the overhead increased, or else a modulator with a greater complexity, which implies a serious problem.

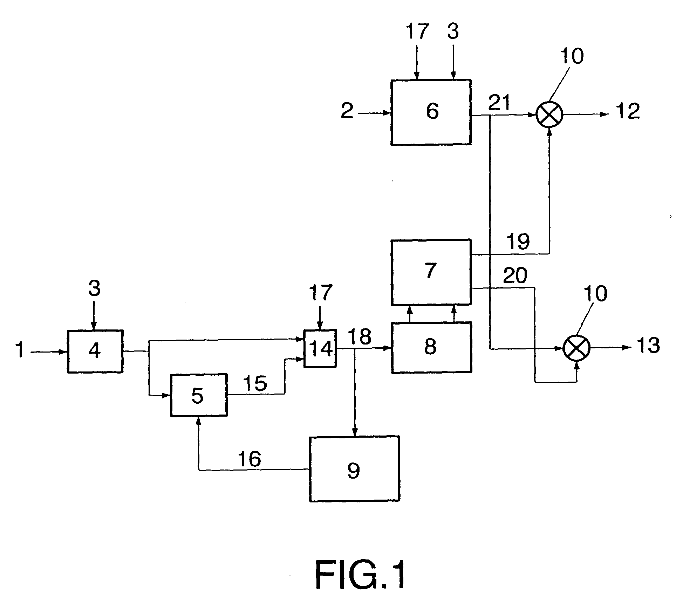

The modulator that includes the process of the invention taught (figure 1) solves said multiuser communication problems, applying the process of the invention.

Given the optimum configuration of the constellation for each number of bits per carrier, the possible phase values are always a subset of the possible phase values of the constellation with the densest points. Due to the characteristics of the modulation, the modulator will send as a first symbol of the frame a phase reference that will not be able to contain information. Afterwards, in order to permit the constellation or the user to be changed without having to send another phase reference, an injective application is carried out between $\Delta b_k$ $\varepsilon$ (0,1,...,P-1) corresponding to the constellation to be used and the $\Delta b_k \varepsilon \ \{0,1,...,P_{max}-1\}$ of the constellation with the maximum number of phases in the following manner:

$$\Delta b_k = \Delta b_k \ P_{max} / P$$

The block diagram of the modulator is shown in figure 1 in whose inputs $a_k$ *(2)*, $\Delta b_k$ (1), the number of bits of the carrier to be modulated (3) and an input (17) that indicates whether a phase reference symbol is being dealt with, are received.

The outputs of the modulator are Re *{$S_k$}* or a component in phase (12), and *Im {$S_k$}* or a component in quadrature (13). The injective application explained above is carried out by a block (4) and $\Delta b'_k$ (11) is obtained. For the optimum constellations described above, the quotient $\underline{P_{max}} / P$ is a power of two, therefore, only the input value $\overline{(1)}$ has to be displaced in terms of the bits per carrier (3). By means of a block (5), the differential phase modulation is implemented in the following manner:

wherein $b_{k-1}$ (16) is the phase value of the preceding symbol, obtained in a memory block (9), to which the phase increment $\Delta b_k$ (11) is applied thereto in order to obtain the absolute phase value $b_k$ (15). As it has been explained above, it is necessary to send a phase reference at the beginning of the frame. For this purpose, the signal that indicates the sending of the phase reference (17) controls a switch (14) in order to select between the input value $\Delta b_k$ (11) or the result of the increment $b_k$ (15). This output value (18) is kept in the memory (9) in order to use it in the following symbol. Therefore, $S_k$ will be the following in the reference phase:

$$S_k = \lambda \ (A + a_k) \ e^{j \ ( (2\pi / P_{max}) \Delta b_k}$$

An efficient implementation of the modulator requires a memory (7) with 2 $P_{max}$ positions that contain the following values:

But the size of the memory (7) can be reduced to *Pmax* / 4 +1 taking the following trigonometric ratios into account:

containing only

A block (8) converts the signal (18) into two suitable indexes to index the memory (7) and to obtain (19) and (20).

The information to be modulated in amplitude, $a_k$ (2), and the number of bits per carrier (3) determine the value of the amplitude to be obtained in a memory (6). The memory (6) contains the values λ (A+$a_j$) (21), therefore, it has as many positions as the sum of the possible number of all the constellations that are used. If the signal (17) indicates that it is necessary to send a phase reference, the amplitude corresponding to the constellation of 2 bits per carrier, that only has information in the phase and has a known amplitude, is selected. This phase reference symbol is one of the ones that are used in reception order to estimate the channel. Finally, the modulator composes the component in phase (12) and in quadrature (13) by means of some multipliers (10).

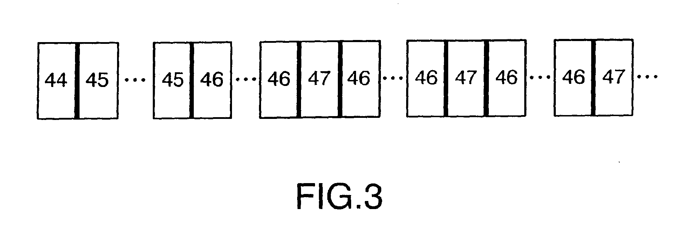

Figure 3 shows the frame structure that is used in the multiuser in this embodiment of the invention. The first symbol (44) is the phase reference, followed by a series of symbols (45) modulated with 2 bits per carrier and that can be directed to all the possible receiving users. The set formed by said symbols (45) and the phase reference (44) is likewise used in the receiver of each one of them for the initial estimation of the channel. The symbols (45) carry information modulated in the phase, thus reducing the overhead of the channel estimation. Afterwards, data symbols (46) are sent that can be directed to a specific user or a set of them, modulated with a certain number of bits per carrier. Besides, known amplitude symbols (which in this embodiment are modulated with 2 bits per carrier) are inserted in the frame. This modulation is known by all the equipment that implement the process of the invention) (47) so that the users who have not been receivers of the preceding data symbols (46) can update their estimations of the channel amplitude and thus follow up the variations thereof. Once again, these symbols carry information modulated in the phase.

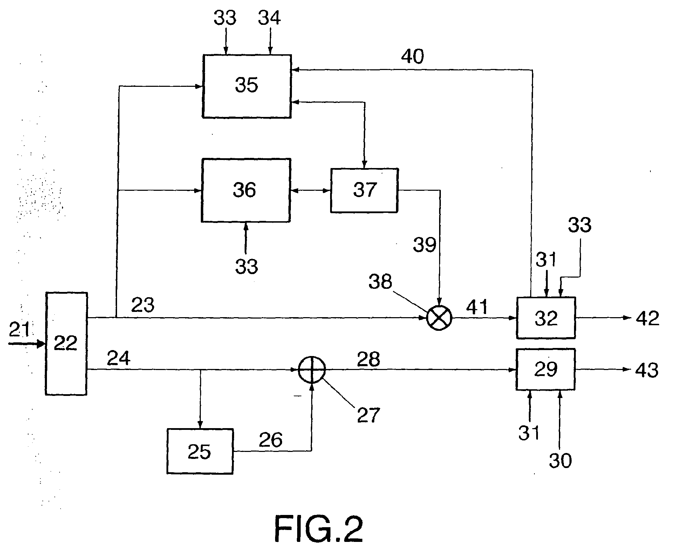

Figure 2 shows the block diagram of the demodulator of the multiuser communication system for this embodiment of the process of the invention. The modulated low pass signal received (21) is converted into polar signals in a block (22) obtaining the phase $\Phi_k$ (24) and the amplitude received $A_k$ (23) received. The phase increment, $\Delta\Phi_k$ (28), is obtained by means of a subtractor (27) that subtracts the phase received, $\Phi_k$ (24), the phase of the preceding symbol, $\Phi_{k-1}$ (26), that is obtained from a memory (25) wherein it was previously stored:

$$\Delta\Phi = \Phi_k - \Phi_{k-1}$$

After this operation, the phase received, $\Phi_k$ (24), is always kept in the memory (25) in the position wherein $\Phi_{k-1}$ was. This phase increment (28) is accompanied by noise, for which reason it is necessary to determine to which of the transmitted possible increments it corresponds. A phase detector (29) carries out this task by selecting the closest one, as far as Euclidean distance is concerned, as the transmitted increment (43), from the one received $\Delta\Phi_k$ (28). The number of bits of the constellation (31) determines the set of possible phase increments transmitted.

On the other hand, by means of a signal (30), the detector (29) in the phase reference symbol is incapacitated.

The amplitude received, $A_k$ (23), is processed differently since it does not have a differential nature. First it is necessary to carry out an estimation of the attenuation of the channel in order to be able to equalize the amplitude received and detect it. The estimation of the channel is carried out by means of a block (36).

The channel estimator (36) calculates a mean during the first S symbols ((44) and (45)) and calculates the weight necessary to equalize the amplitude, (39), in the following way:

In order to increase the values of $A_k$ (23) and in order to maintain the calculated weight (39) that will be applied for the symbol S+1, a memory (37), from which the same positions may be reused is used. The channel estimation signal (33) indicates during which symbols it is necessary to calculate the mean. Besides, a block (35) is incapacitated by means of the one that updates the weights (39), and an amplitude detector (32), given that the value of the weight needed to equalize the amplitude is being calculated. The amplitude received $A_k$ (23) is equalized by a multiplier (38) in order to obtain the input amplitude value $A_k$ (41), and to apply it to the amplitude detector (32). The amplitude inputted into the detector, $A_k$ (41), is accompanied by noise; therefore the detector (32) must determine at what amplitude of the possible ones transmitted it corresponds. The bits per carrier of the constellation (31) determine the set of possible amplitudes transmitted. The detected amplitude $\hat{A}_k$ (42) is the closest one, as far as the Euclidean distance is concerned, from the equalized one received, $\bar{A}_k$ (41). Likewise, the amplitude detector (32) calculates the amplitude error or noise, $e_k$ (40), in the following manner:

$$e_k = \bar{A}_k \; \hat{A}_k$$

When a user is the destination of the information, and therefore, knows the bits per carrier of the constellation, he can update his initial estimation of the channel, updating the weights, (39), by means of an adaptive algorithm that minimizes $e_k$ *(40)*. This algorithm is implemented in the weight updating block (35), that is incapacitated during the initial estimation of the channel, signal (33), and when an incapacitation signal (34) that is produced when the constellation received is not known, so indicates. The adaptive algorithm needs as amplitude inputs received $A_k$ (23), the calculated error $e_k$ (40), and the weight value (39), that has been applied to the amplitude received, and that is obtained from the memory (37).

This block (35) calculates the new weight value that is kept in the memory (37), which will be applied to the amplitude received from the next symbol. So that users who are not the destination of the information, or who do not know the constellation used, they can follow the variations of the channel and refine their initial estimation, known amplitude (47) symbols, modulated with 2 bits in this embodiment of the invention, that serve to update the weight, (39), are inserted in the frame, and adjust better to the channel. In this way, all the users keep their initial estimations of the channel updated. The signal (34) capacitates the updating block (35) during these symbols. These symbols (47) also permit the correction of the possible deviation produced in the estimation of the channel by the iterations of the blocks (35) based on the detected symbols.

## Claims

1. Process for standardized differential in-phase and coherent in amplitude modulation for multiuser communication, applicable in bidrectional communication of user multiple equipment wherein a differential in-phase and coherent in amplitude modulation, that requires the sending of a phase reference symbol prior to the sending of information, is used, **characterized in that** the information to be modulated in the phase difference, that belongs to the set of possible information according to the number of phases of the constellation to be used, an injective application is carried out between this set and the set of information possible to be modulated corresponding to the constellation with the maximum number of phases, consisting of a projection of the elements of the first set in the same number of elements of the second set that produce the maximum separation, measured in radians, of the points resulting from the constellation with the maximum number of phases; so that the information inputted in the phase differential modulator belongs to this second set, and thus minimize the overhead (information to control the system necessary for a correct reception of the data and that is sent along therewith), and to optimize the change of constellation or user within a single frame.

2. Process for standardized differential in-phase and coherent in amplitude modulation for multiuser communication, according to claim 1, wherein equalization is done in reception, **characterized in that** the equalization of the channel is done in two steps, wherein the first one carries out an initial estimation of the attenuation of the channel, and the second one carries out the follow-up and reduction of residual error of said estimation by an adaptive algorithm.

3. Process for standardized differential in-phase and coherent in amplitude modulation for multiuser communication, according to claim 2, **characterized in that** the initial estimation of the attenuation of the channel is carried out by using the phase reference symbol and a certain number of the following symbols received, wherein the symbols of the set formed by the reference symbol and the following symbols have an amplitude value known in advance; said estimation being carried out by the accumulation of amplitudes received from the symbols of the set and the mean between the number of symbols that comprise said set.

4. Process for standardized differential in-phase and coherent in amplitude modulation for multiuser communication, according to claim 3, **characterized in that** encoded information is sent in the phase difference in the symbols used for the initial estimation of the attenuation of the channel following the phase reference.

5. Process for standardized differential in-phase and coherent in amplitude modulation for multiuser communication, according to claim 3, **characterized in that** the estimation of the attenuation of the channel is used as an initial input into a adaptive algorithm in order to follow the changes of amplitude of the channel from the modulated information received and to reduce the error made in the first estimation.

6. Process for standardized differential in-phase and coherent in amplitude modulation for multiuser communication, according to claim 1, **characterized in that** known amplitude symbols are sent and with in-phase encoded information at certain instants indicated by the transmitter to the receiver, in order to selectively improve the amplitude estimation, the signal-to-noise ratio or both.

FIG.1

EP 1 624 637 A1

FIG.2

8

| 44 | 45 | ··· | 45 | 46 | ··· | 46 | 47 | 46 | ··· | 46 | 47 | 46 | ··· | 46 | 47 | ··· |

# FIG.3

**INTERNATIONAL SEARCH REPORT**

| International application No. |
| --- |
| PCT/ ES 2004/000207 |

| A. | CLASSIFICATION OF SUBJECT MATTER |
| --- | --- |

**IPC7**  H 04 L 27 / 34 , H 04 J 11 / 00.

According to International Patent Classification (IPC) or to both national classification and IPC

| B. | FIELDS SEARCHED |
| --- | --- |

Minimum documentation searched (classification system followed by classification symbols)

**IPC7**  H 04 L 27 / 34 , H 04 J 11 / 00

Documentation searched other than minimum documentation to the extent that such documents are included in the fields searched

Electronic data base consulted during the international search (name of data base and, where practicable, search terms used)

CIBEPAT,EPODOC,WPI,PAJ,INSPEC,NPL,XPESP.

C.  DOCUMENTS CONSIDERED TO BE RELEVANT

| Category* | Citation of document, with indication, where appropriate, of the relevant passages | Relevant to claim No. |
| --- | --- | --- |
| A | FISCHER et al : "Diferential encodings strategies for transmission over fading channels". AEU International Journal of Electronics and Communications.Gustav Fisher Verlag, Jena ,Alemania , 2000 , Vol. 54 , n° 1 , ISSN 1434-8411 , **pages 59-66** | |
| A | DE 19945280 A1 (IAD Gesellschaft für Informatik,Automatisierung und Datenverarbeitung mbH) 29.03.2001 | |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| **26 July 2004 (26.07.04)** | **8 September 2004 (08.09.04)** |

| Name and mailing address of the ISA/ | Authorized officer |
| --- | --- |
| **S.P.T.O.** | |
| Facsimile No. | Telephone No. |

Form PCT/ISA/210 (second sheet) (July 1992)

**INTERNATIONAL SEARCH REPORT**
Information on patent family members

International Application No

PCT/ ES 2004/000207

| Patent document cited in search report | Publication date | Patent familiy member(s) | Publication date |
|---|---|---|---|
| DE19945280 A1 | 29.03.2001 | NONE | |